# DEMANDE DE BREVET EUROPEEN

(11) **EP 4 796 614 A1**
(43) Date de publication de la demande: **26.08.2026**
(21) Numéro de dépôt: 26155474.5
(22) Date de dépôt: 30.01.2026
(51) Int. Cl.: C09K 8/506, C09K 8/508, C09K 8/512

(54) **PROCEDE DE MODIFICATION DE LA PERMEABILITE D'UNE ZONE DE FORMATION GEOLOGIQUE**

(30) Priorité: 20.02.2025 FR 2501772
(71) Demandeur: IFP Energies nouvelles, 92500 Rueil-Malmaison (FR)
(72) Inventeur: ROUSSEAU, David, 92852 Rueil-Malmaison Cedex (FR)
(74) Mandataire: IFP Energies nouvelles

(57) **Abrégé**

L'invention concerne un procédé de distribution de modification de distribution de la perméabilité d'une zone (3) de formation géologique avec des perméabilités différentes entre un puits (1) d'injection de fluide et un puits (2) de production de fluide
- a) on injecte une solution contenant un polymère hydrophobiquement associatif PHA dans le puits (1) d'injection, pour que ladite solution colmate la perméabilité des portions de perméabilité faible en formant un premier gel de PHA
- b) on injecte une solution contenant au moins un sol dans le puits (1) d'injection, pour que ledit sol colmate la perméabilité des portions de perméabilité élevée (5) laissées libres en formant un deuxième gel,
- c) on injecte une solution contenant un agent tensioactif dans le puits (1) d'injection, interagissant avec le premier gel de PHA de façon à ce que la perméabilité colmatée à l'étape a) des portions de perméabilité faible redevienne accessible.

## Description

### Domaine technique

L'invention concerne des exploitations du sous-sol, notamment des exploitations géothermales, des exploitations de lithium (éventuellement en co-production avec des exploitations géothermales), et des exploitations de production d'hydrocarbures.

Elle s'intéresse notamment à des exploitations du sous-sol ayant généralement recours à des associations de deux puits, un premier puits dit d'injection, et un deuxième puits dit de production, séparés l'un de l'autre par une formation géologique présentant des hétérogénéités structurelles (fractures) et/ou une distribution de perméabilités.

Elle s'intéresse plus particulièrement aux exploitations géothermales : parmi les différents types d'exploitations géothermales, l'invention s'intéresse aux « doublets géothermaux » (les premiers puits d'injection associés aux deuxièmes puits de production mentionnés plus haut) en aquifère, profonds ou non, dans lesquels la chaleur est transportée vers la surface par la saumure de l'aquifère. L'invention s'intéresse aussi aux systèmes géothermaux dits à haute énergie très profonds en roche chaude sèche ou non, connus sous l'acronyme anglais "EGS" (pour « Enhanced Geothermal Systems ») dans lesquels le fluide caloporteur est injecté depuis la surface. L'invention peut aussi s'appliquer aux installations géothermales de stockage inter-saisonnier de la chaleur en aquifère, connus sous l'acronyme anglais "ATES" (pour « Aquifer Thermal Energy Storage ») en anglais.

Ces systèmes, qui mettent tous en œuvre au moins un puits, un injecteur de fluide caloporteur, et au moins un puits producteur de fluide caloporteur, sont susceptibles de voir leur efficacité énergétique réduite par des effets de mises en contact hydraulique trop rapides entre puits injecteurs et puits producteurs. Ces effets, dits de "courts-circuits hydrauliques" ont pour origine des écoulements préférentiels dans des zones très fortement perméables ou dans des fractures de grande ouverture et/ou faiblement ramifiées.

Ils ont été décrits dans la littérature dans le cas des systèmes géothermaux en aquifère pour la production de chaleur ou les ATES : on pourra se reporter par exemple à l'article « Thermal short circuit on groundwater heat pump » de Antonio CALGARO et al, Applied Thermal Engineering, 57(2013) 107-115). Ils ont également été décrits dans le cas des systèmes géothermaux en roches chaudes sèches pour les EGS : on peut par exemple se reporter à l'article «Multiscale short-circuiting mechanisms in multiple fracture enhanced geothermal systems », de GEE B. et al, Geothermics 94 (juillet 2021).

L'invention s'intéresse aussi aux réservoirs d'hydrocarbures fracturés, et à leurs problématiques associées, comme la prévention des venues d'eau, le contrôle de profil d'injection d'eau au voisinage des puits (« injection profile control » en anglais) ou en profondeur (« conformance control » en anglais), comme décrit, par exemple, dans l'article «Gel Treatments for Reducing Channeling in Naturally Fractured Réservoirs », de S.R SERIGHT et al, SPE Production and Facilities Journal Paper, Novembre 1999, volume 14 (4) 269-276.

De façon plus globale, la présente invention s'intéresse donc aux techniques permettant de modifier la perméabilité de formations géologiques, en vue, notamment, de réduire la perméabilité des zones très perméables ou des fractures responsables d'une communication trop rapide entre les deux puits (écoulement préférentiel de la phase aqueuse), de préférence en modifiant le moins possible la perméabilité de la matrice perméable ou de zones de fractures minoritaires (c'est-à-dire les fractures de faible ouverture et/ou fortement ramifiées). Il s'agit ainsi d'obtenir que l'écoulement de la phase aqueuse se fasse préférentiellement par la matrice ou bien par les zones de fractures minoritaires.

### Technique antérieure

Il est connu du brevet FR2933730 un procédé de restauration de la perméabilité dégradée d'une roche poreuse, dans laquelle on effectue les étapes suivantes:
- on traverse ladite roche par la circulation d'au moins une solution aqueuse contenant des polymères hydrophobiquement associatifs dits PHA
- on traite ladite roche en y injectant une solution aqueuse d'au moins un tensioactif à une concentration déterminée pour faire disparaître les liens hydrophobes entre chaînes de polymères associatifs.

Ces PHA permettent ainsi de colmater au moins une fraction de l'espace poral, en y formant des gels. Mais leur particularité est que, par addition de tensioactifs appropriés, on peut réduire drastiquement les liens inter-chaînes responsables de la présence des gels, rendant de fait à nouveau accessibles les parties de l'espace poral en question : le colmatage des porosités par ce type de polymère peut donc être réversible.

Il est également connu de l'article « Controlling excess water production in fractured carbonate reservoirs: chemical zonal protection design » de B. GOSH et al., Journal of Petroleum Exploration and Production Technology,Volume 10, pages 1921-1931, (2020), une technique permettant de lutter contre la venue d'eau en excès dans les puits horizontaux complexes, dans le cadre de la production d'hydrocarbures, à l'aide de trois traitements successifs :
- un traitement par un fluide comprenant des particules de carbonate de calcium en suspension associées à des composés viscosifiants comme l'amidon ou le xanthane,
- puis un traitement par un fluide susceptible de former un gel, injecté sous forme d'un pré-gel, à base d'acrylamide et de vinyl pyrrolidone,
- puis un traitement enzymatique qui vient casser les matériaux formant un « gâteau » (« cake-forming materials » en anglais) à base d'amidon, de polymère de xanthane et des particules de carbonate de calcium, le traitement utilisant un fluide comprenant un mélange d'enzymes (xanthanase et amylase).

L'efficacité de cette méthode est limitée par la cinétique et la sensibilité aux conditions opérationnelles du processus de réaction enzymatique.

La publication "Successful Water Shutoff Treatment of Fractured Carbonate Horizontal Well Under Aquifer Pressure Support" de HERNANDO L. et al, présentée à la conférence « Abu Dhabi International Petroleum Exhibition & Conference, Abu Dhabi », aux Emirats Arabes Unis, du 09 novembre 2020 (numéro de la publication: SPE-203394-MS), décrit un procédé comprenant les étapes d'injection suivantes réalisées sur l'un des puits du système à traiter:
- injection de microgels pour protéger la matrice en s'adsorbant sur les parois de la roche;
- injection d'un pré-gel polymère (mélange de polymères en solution aqueuse et d'agent de réticulation). Ce pré-gel ne peut pas facilement se propager dans la matrice du fait de la présence des microgels adsorbés et se propage donc dans les fractures;
- fermeture du puits pour permettre au pré-gel de se transformer en gel sous l'effet d'une réaction de gélification enclenchée par la température de la formation souterraine. Ceci a pour effet de colmater les fractures, c'est-à-dire de réduire très fortement leur perméabilité. Dans cette méthode, les microgels ne sont pas retirés de la matrice à la fin de l'opération, mais, du fait de leur propriété de réduction sélective de la perméabilité, la perméabilité aux hydrocarbures de la matrice n'est pas ou peu modifiée. En outre, dans cette méthode, les microgels ne peuvent, par principe, pas complètement protéger la matrice car ils ne font que s'adsorber sur la parois des pores sans les colmater: ils ne créent donc pas un obstacle parfait à la propagation du pré-gel.

Le but de l'invention est alors d'améliorer les techniques visant à modifier la distribution de perméabilité (notamment de façon sélective) de formations géologiques, notamment en vue de les rendre plus efficaces, plus faciles à mettre en œuvre, plus particulièrement dans le domaine de la géothermie.

### Résumé de l'invention

L'invention a tout d'abord pour objet un procédé de modification de la distribution de perméabilité d'une zone de formation géologique présentant des portions de matériau rocheux de perméabilités différentes, dont des premières portions de perméabilité dite faible et des deuxièmes portions de perméabilité dite élevée, ladite zone de formation géologique étant située entre un puits d'injection de fluide et un puits de production de fluide, ledit procédé comprenant les étapes successives suivantes :
- a) on injecte une solution contenant au moins un polymère hydrophobiquement associatif PHA dans le puits d'injection, pour que ladite solution circule dans ladite zone de formation géologique et qu'elle colmate au moins en partie la perméabilité des premières portions de perméabilité faible en formant un premier gel de PHA,
- b) on injecte une solution contenant au moins un sol dans le puits d'injection, pour que ledit sol circule dans ladite zone et qu'il colmate au moins en partie la perméabilité des deuxièmes portions de perméabilité élevée laissées libres en formant un deuxième gel,
- c) on injecte une solution contenant au moins un agent tensioactif dans le puits (1) d'injection, ledit ou lesdits agents tensioactif(s) circulant dans ladite zone et interagissant avec le premier gel de PHA de façon à ce que la perméabilité colmatée à l'étape a) des premières portions de perméabilité faible redevienne au moins en partie accessible aux fluides.

Les étapes a), b) et c) sont opérées successivement.

Des étapes supplémentaires optionnelles peuvent être insérées dans le déroulé du procédé, notamment avant l'étape a), et/ou après l'étape c) et/ou entre les étapes a) et b) et/ou entre les étapes b) et c). Il peut notamment s'agir d'étape(s) d'injection de solution aqueuse dans le puits d'injection contenant optionnellement un ou des sels minéraux dissous et/ou un ou des polymères non associatifs solubilisés, hydrosolubles donc).

L'invention s'appuie sur des propriétés d'une part des solutions aqueuses de polymères hydrophobiquement associatifs (PHA), ou polymères associatifs, et d'autre part des interactions entre les tensioactifs et les PHA : Les PHA sont des polymères dont le squelette est hydrophile mais qui comportent, le long des chaînes, de faibles quantités (quelques pourcents molaire) de monomères hydrophobes susceptibles de s'associer dans l'eau sous la forme de nano domaines hydrophobes, également appelés "liens hydrophobes". Ceux-ci agissent comme des points de réticulation temporaires et confèrent aux PHA des propriétés originales, notamment en ce qui concerne leur rhéologie. Une fois en contact avec des agents tensioactifs de nature appropriée, et en concentration appropriée, la viscosité des polymères PHA peut être largement modifiée, et notamment chuter fortement.

Dans l'étape a) selon l'invention, les PHA vont se propager dans toutes les perméabilités de la formation et former sélectivement un gel dans les zones de plus faible perméabilité, colmatant les perméabilités correspondantes. De fait, dans cette étape, les portions faiblement poreuses de la roche sont celles qui sont utiles pour faire cheminer le fluide caloporteur (généralement une solution aqueuse) dans des applications géothermales, soit, dans le cas des EGS, depuis le puits d'injection vers le puits de production par des trajets suffisamment lents et tortueux pour se réchauffer suffisamment quand il atteint le puits de production, soit dans le cas des doublets géothermaux en aquifère et des ATES, dans le but d'éviter toute influence de l'eau injectée sur la température de l'eau produite. Cette étape a) entend donc protéger provisoirement ces portions faiblement perméables en les rendant inaccessibles à d'autres solutions/composés chimiques.

Dans l'étape b), le sol (qu'on peut aussi appeler pré-gel ou encore « gellant » en anglais) va être injecté dans le puits injecteur et se propager dans les seules zones de forte perméabilité (ou fractures) restant accessibles. L'injection sera ensuite de préférence arrêtée pendant une durée adaptée aux propriétés du sol injecté, durée préférentiellement comprise entre quelques heures et quelques jours, dans le but de permettre au sol de gélifier. De fait, dans cette étape, on vient colmater ces portions à forte perméabilité (ou fractures) qui sont, au moins en partie, responsables de « courts-circuits hydrauliques » entre le puits d'injection et le puits de production, faisant circuler le fluide caloporteur trop vite/par des chemins trop directs entre le puits d'injection et le puits de production, et l'empêchant ainsi d'atteindre la température suffisante dans le cas des EGS, ou bien, dans le cas des doublets géothermaux en aquifère et des ATES, créant une communication entre le point d'injection et le point de production qui entraîne une baisse de la température de l'eau produite.

Dans l'étape c), le tensioactif va modifier la rhéologie du gel de PHA logé dans les portions à plus faible perméabilité (ce gel de PHA redevenant au moins en partie un sol), ce qui les rend à nouveau accessibles pour le fluide caloporteur, alors que les portions à forte perméabilité (ou fractures), restent, elles, colmatées par l'autre gel déposé à l'étape b) à partir d'un sol.

Après ces trois étapes, on obtient donc une formation géologique entre les deux puits qui est « réparée », en ce sens que l'on peut reprendre l'exploitation géothermale avec un fluide caloporteur qui va circuler du premier puits à l'autre majoritairement, voire exclusivement, via les portions à faible perméabilité, les portions à forte perméabilité (ou fractures), inaccessibles, étant « by-passées » par le fluide caloporteur. Dans le cas des EGS, cela va permettre au fluide caloporteur injecté de rester suffisamment longtemps en contact avec la roche pour atteindre la température souhaitée. Et dans le cas des doublets géothermaux en aquifère et des ATES, cela va limiter fortement le risque d'influence de l'eau réinjectée sur la température de l'eau produite.

Naturellement, ce traitement peut être répété au cours de l'exploitation s'il s'avère nécessaire, notamment si le gel contenu dans les portions à forte perméabilité (ou fractures) vieillit, se délite, et rend à nouveau au moins partiellement accessible les portions de forte perméabilité (ou fractures) au fluide caloporteur.

Avantageusement, dans l'étape b), le sol peut former un gel par une réaction de gélification qui peut être spontanée ou activée par un paramètre physique, notamment par apport thermique, ou par un activateur chimique. La chaleur peut être naturelle, celle de la formation sous-terraine, ou on peut prévoir de chauffer la solution contenant le sol avant/pendant son injection.

Les premières portions de perméabilité faible peuvent correspondre à un réseau de fractures secondaires (ou microfractures, induites et/ou naturelles) et/ou une région matricielle, dont la perméabilité peut-être, par exemple, dans la gamme 0,1 mD à 1000 mD.

Les deuxièmes portions de perméabilité élevée peuvent correspondre à un réseau de fractures majeures (induites et/ou naturelles) et/ou à des zones à forte perméabilité, par exemple dans la gamme 1 mD à 100 D, ou de 1 mD à 1000 D ou 100 mD à 1000 D. Le rapport entre la perméabilité de la zone de forte perméabilité et celle de la zone de faible perméabilité peut ainsi, par exemple, être compris entre 10 et 10⁶.

Dans ces différentes gammes, la perméabilité des premières portions à perméabilité faible est toujours inférieure à celle des deuxièmes portions à perméabilité élevée.

Le polymère hydrophobiquement associatif PHA injecté à l'étape a) peut comprendre des chaînes constituées à partir de monomères hydrophiles et de monomères hydrophobes, les fractions molaires totales en monomères hydrophobes étant de préférence comprises entre 0,05% et 10%, notamment entre 0,1% et 3%.

On peut utiliser un type ou plusieurs types différents de polymère PHA en mélange.

Leurs masses molaires sont de préférence comprises entre 10³ et 10⁸ g/mol.

Avantageusement, le sol injecté à l'étape b) peut être choisi parmi au moins un des composés suivants :
- des polymères hydrosolubles, notamment de type polyacrylamide, en solution et d'un agent de réticulation, qui peut être organique ou inorganique,
- des particules, notamment de silice colloïdale, aptes à former des liens entres elles, avec ou sans agent de réticulation,
- des polymères hydrophobiquement associatifs PHA insensibles au(x) tensioactif(s) injectés à l'étape c) (optionnellement avec un agent de réticulation).

On comprend par « insensible » aux tensioactifs le fait que si l'on choisit à cette étape un PHA, il devra spécifiquement ne pas être modifié quand il est mis en contact des tensioactifs de l'étape c) et notamment conserver essentiellement sa viscosité, ou plus exactement sa rhéologie en tant que gel.

Avantageusement, l'agent tensioactif injecté à l'étape c) peut être choisi parmi au moins un des composés suivants :
- les alcools gras polyéthoxylés,
- les sels de métaux alcalins de sulfate d'alkyle éthoxy,
- les bromures de triméthyl ammonium d'alkyle.

De préférence, les solutions contenant
- le polymère hydrophobiquement associatif PHA injecté à l'étape a)
- et/ou le sol injecté à l'étape b)
- et/ou que l'agent tensioactif injecté à l'étape c)
peuvent être des solutions aqueuses, contenant optionnellement des sels minéraux dissous.

On peut déterminer la concentration en agent(s) tensioactif(s) dans la solution injectée à l'étape c) en fonction de la concentration micellaire critique CMC dudit(desdits) tensioactif(s). La concentration en tensioactifs peut être voisine de la concentration micellaire critique du tensioactif.

La concentration en tensioactifs peut être comprise entre 2 et 5 fois la concentration micellaire critique du tensioactif.

Comme décrit dans le brevet précité FR2933730 les interactions entre parties hydrophobes des tensioactifs et groupements hydrophobes des PHA sont en effet responsables de modifications importantes des propriétés rhéologiques des solutions de PHA. En fonction de la concentration en tensioactifs dans la solution de PHA, deux régimes peuvent être distingués :
- à faible concentration, les molécules de tensioactifs ont tendance à s'associer aux groupements hydrophobes des chaînes et à renforcer les liens hydrophobes. Il en résulte une augmentation de la viscosité de la solution de PHA.
- lorsque la concentration en tensioactifs atteint et dépasse une certaine valeur, par exemple de l'ordre de grandeur de la concentration micellaire critique du tensioactif mesurée en l'absence de PHA, un maximum puis une diminution de la viscosité sont observés. Pour des concentrations en tensioactifs encore plus importantes, la viscosité atteint une valeur plateau, qui est plus faible que la viscosité initiale de la solution de PHA sans tensioactifs. Ce comportement est interprété par la formation de micelles mixtes entre groupements hydrophobes des chaînes et molécules de tensioactifs. Lorsque la concentration en tensioactifs augmente, les molécules de tensioactifs deviennent de plus en plus dominantes dans les micelles, jusqu'à ce qu'il n'y ait plus qu'un groupement hydrophobe par micelle. Les liens hydrophobes entre chaînes de polymères, qu'ils soient intra ou inter chaînes disparaissent donc, et la viscosité de la solution se rapproche de celle d'une solution de polymères non associatifs, de squelette équivalent à celui des PHA.

L'étape a) d'injection de la solution contenant au moins un polymère hydrophobiquement associatif PHA peut être précédée d'une étape a0) d'injection d'une solution aqueuse sans ajout de composé chimique hormis d'éventuels sels minéraux dissous et/ou d'une étape d'injection a0') d'une solution aqueuse comprenant des polymères non associatifs solubilisés et éventuellement des sels minéraux dissous.

L'étape a) peut aussi être suivie d'une étape a1) d'injection d'une solution aqueuse sans ajout de composé chimique hormis d'éventuels sels minéraux dissous ou bien et/ou d'une étape d'injection a1') d'une solution aqueuse comprenant des polymères non associatifs solubilisés et éventuellement des sels minéraux dissous.

L'étape b) d'injection du sol peut être précédée d'une étape b0) d'injection d'une solution aqueuse sans ajout de composé chimique hormis d'éventuels sels minéraux dissous ou bien et/ou d'une étape d'injection b0') d'une solution aqueuse comprenant des polymères non associatifs solubilisés et éventuellement des sels minéraux dissous.

L'étape b) peut aussi être suivie d'une étape b1) d'injection d'une solution aqueuse sans ajout de composé chimique hormis d'éventuels sels minéraux dissous ou bien et/ou d'une étape d'injection b1') d'une solution aqueuse comprenant des polymères non associatifs solubilisés et éventuellement des sels minéraux dissous.

L'étape c) d'injection de la solution contenant au moins un agent tensioactif peut être précédée d'une étape c0) d'injection d'une solution aqueuse sans ajout de composé chimique hormis d'éventuels sels minéraux dissous ou bien et/ou d'une étape d'injection c0') d'une solution aqueuse comprenant des polymères non associatifs solubilisés et éventuellement des sels minéraux dissous.

L'étape c) peut aussi être suivie d'une étape c1) d'injection d'une solution aqueuse sans ajout de composé chimique hormis d'éventuels sels minéraux dissous ou bien et/ou d'une étape d'injection c1') d'une solution aqueuse comprenant des polymères non associatifs solubilisés et éventuellement des sels minéraux dissous.

L'invention a également pour objet l'utilisation du procédé décrit plus haut pour réduire ou supprimer les courts-circuits hydrauliques entre le puits d'injection et le puits de production à travers une zone de formation géologique.

L'invention a également pour objet l'utilisation du procédé décrit plus haut pour une exploitation géothermale, notamment
- pour des systèmes aquifères, profonds ou non profonds, (l'eau étant déjà présente dans la roche, et on peut injecter de l'eau en plus et/ou réinjecter l'eau sortant du puits de production)
- pour les systèmes géothermaux haute énergie très profonds, notamment en roche chaude sèche dits EGS en anglais, (où l'on injecte de l'eau depuis l'extérieur et éventuellement on réinjecte de l'eau une fois extraite du puits de production)
- pour les installations géothermales de stockage inter-saisonnier de chaleur en aquifère dits ATES en anglais,
ou pour une exploitation de gisements d'hydrocarbures, notamment par une technique de récupération assistée d'hydrocarbures RAH (technique aussi connue sous l'acronyme EOR pour le terme anglais de « Enhanced Oil recovery »).

Le procédé selon l'invention permet de réduire la perméabilité des zones très perméables/très poreuses ou des fractures responsables de la communication rapide entre les deux puits d'au moins un facteur 8 ou de préférence au moins un facteur 10, alors que le facteur de réduction de la perméabilité de la matrice perméable ou des zones de fractures minoritaires doit être le plus proche possible de 1 (pas de modification de perméabilité) et préférentiellement inférieur à 100.

### Liste des figures

[Fig 1]

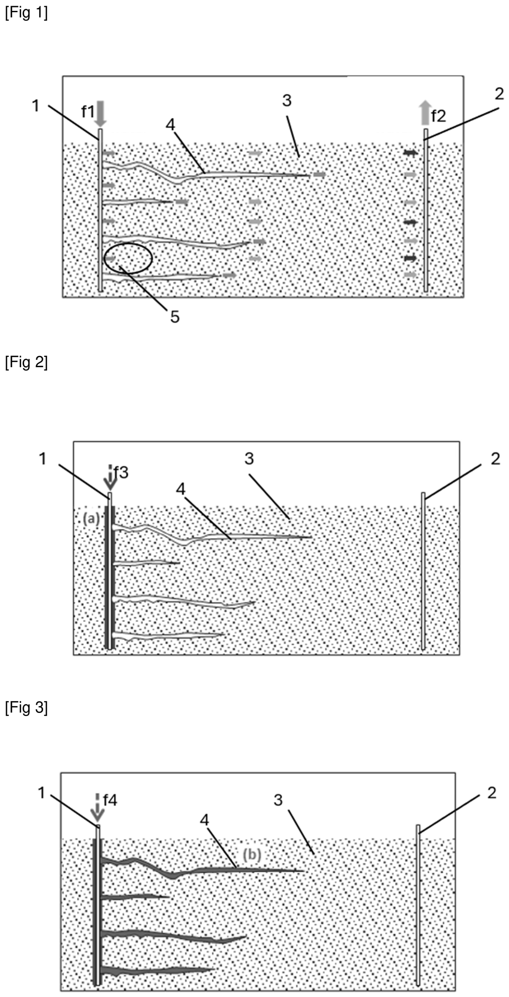

   La figure 1 représente un schéma d'une coupe verticale d'une forme géologique entre un puits d'injection et un puits de production, selon une étape a0) d'injection d'eau selon le procédé de traitement de l'invention.
[Fig 2]
   La figure 2 représente un schéma de la même coupe que la figure 1, selon une étape a) d'injection d'une solution de PHA selon le procédé de traitement de l'invention.
[Fig 3]
   La figure 3 représente un schéma de la même coupe que la figure 1, selon une étape b) d'injection d'une solution de sol (ou pré-gel ) selon le procédé de traitement de l'invention.
[Fig 4]

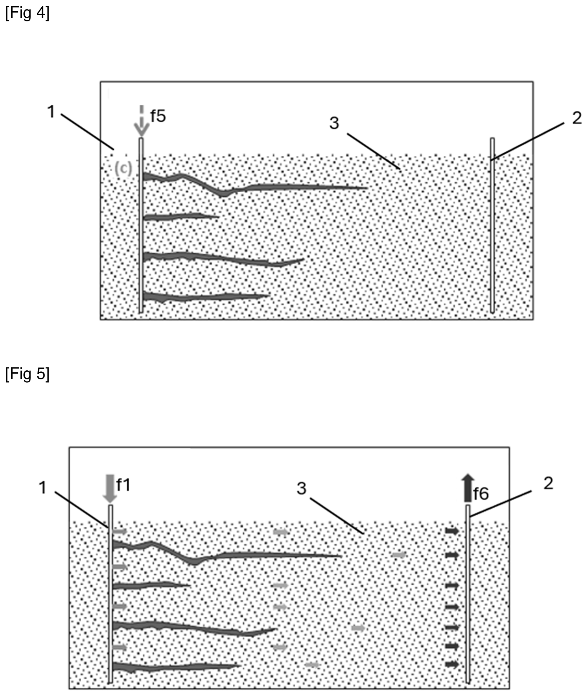

   La figure 4 représente un schéma de la même coupe que la figure 1, selon une étape c) d'injection d'une solution de surfactants selon le procédé de traitement de l'invention.
[Fig 5]
   La figure 5 représente un schéma de la même coupe que la figure 1, selon une étape d) d'injection d'eau selon le procédé de traitement de l'invention.
[Fig 6]

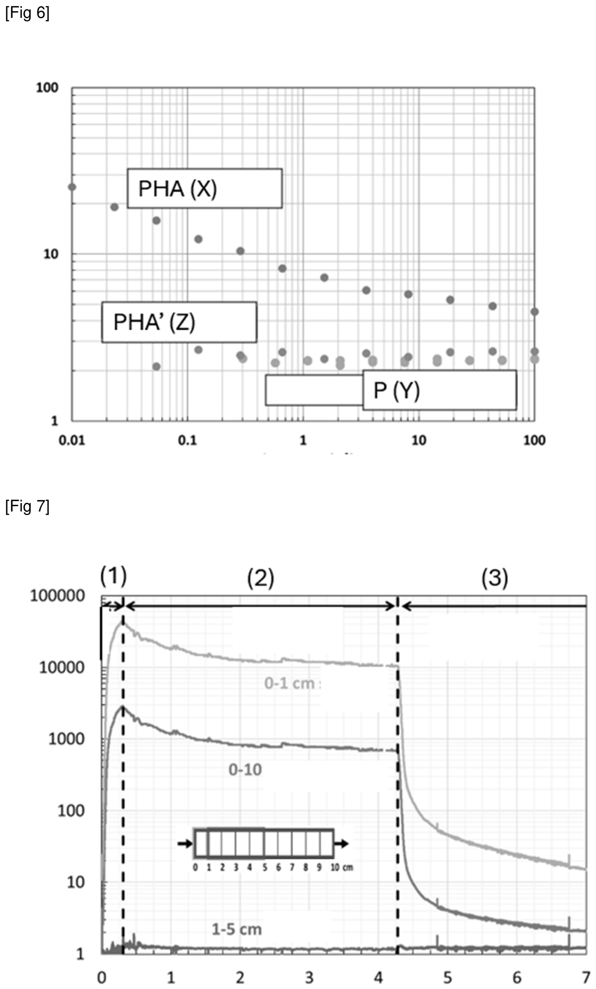

   La figure 6 est un graphe représentant le taux de cisaillement (« shear rate » en anglais) en unités s⁻¹ dans l'exemple 1 en fonction de la viscosité relative (c'est-à-dire le rapport entre la viscosité de la solution et la viscosité de la phase aqueuse sans polymère solubilisé) de polymères notés PHA comme ceux utilisés à l'étape a) du procédé de traitement de l'invention, en comparaison avec celui de polymères équivalents mais non associatifs notés P et avec celui des polymères PHA associés à un surfactant et notés PHA'.
[Fig 7]
   La figure 7 est un graphe représentant en abscisse le nombre de volume de pore injectés PVI dans l'exemple 1 (c'est-à-dire le rapport entre le volume de fluide injecté et le volume poreux de la carotte de roche utilisée dans l'expérience, sans unité) de différents fluides et en ordonnée la perte de charge normalisée Rm (ou facteur de réduction de la mobilité de la phase aqueuse) d'un échantillon représentatif d'une formation géologique, pendant les étapes a) et b) du procédé de traitement selon l'invention.
[Fig 8]

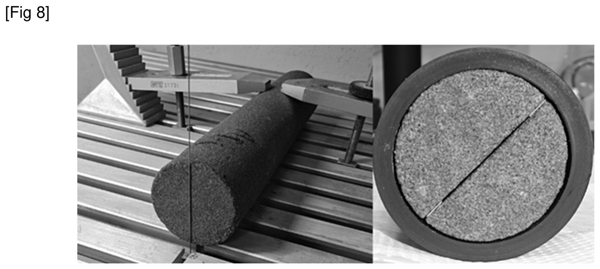

   La figure 8 présente une vue de la carotte de grès utilisée dans le test de l'exemple 2, au cours du sciage en vue de créer une fracture, et après le sciage permettant de garder la fracture ouverte.

Les figures 1 à 5 qui représentent le déroulé d'un mode de réalisation du procédé selon l'invention sont très schématiques, pas à l'échelle, afin d'être claires.

Les mêmes composants présentent les mêmes références d'une figure à l'autre.

### Description des modes de réalisation

Le procédé selon l'invention sera décrit ci-après de façon plus détaillée, selon des modes de réalisation non limitatifs donnés à titre d'illustration.

### Produits concernés et conditions opératoires

### Les polymères PHA

L'invention utilise des polymères PHA au sens large, qui peuvent être constitués par une grande variété de monomères hydrophiles et de monomères hydrophobes, et qui peuvent être préparés par différentes méthodes.

Parmi les méthodes de synthèse, on peut citer la post-modification, qui consiste à greffer des groupements hydrophobes sur des chaînes polymères hydrophiles préexistantes (on pourra se reporter à l'article « Hydrophobically associating polyacrylamides and their partially hydrolyzed derivatives prepared by post-modification. 1. Synthesis and characterization". Polymer, 43-7, 2055-2064, Feng et al., 2002), et la copolymérisation micellaire, qui consiste à polymériser simultanément en solution aqueuse les monomères hydrophiles et les monomères hydrophobes, ces derniers étant solubilisés dans des micelles (on pourra se reporter à l'article « "Micellar copolymerization of associative polymers: Study of the effect of acrylamide on sodium dodecyl sulfate-poly(propylène oxide) methacrylate mixed micelles". Journal of Colloid and Interface Science, 289-2, 359-370, Bastiat et al., 2005).

La masse molaire des polymères PHA peut être comprise entre environ 10³ et environ 10⁸ g/mol.

Les chaînes sont constituées par un ou plusieurs types de monomères hydrophiles et par un ou plusieurs types de monomères hydrophobes.

Les fractions molaires totales en monomères hydrophobes peuvent varier entre environ 0,05% et environ 10%, préférentiellement entre 0,1% et 3%.

Ci-dessous une liste non exhaustive de monomères hydrophiles pouvant être utilisés: l'acrylamide, le méthacrylamide, l'acide 2-acrylamido-2-méthylpropane sulfonique (AMPS), l'acide acrylique, le N,N-diméthylacrylamide, le diméthylaminoéthyl méthacrylate (DMAEMA), le diméthylaminopropyl méthacrylamide, l'hydroxyéthyl acrylate (éthylène glycol monoacrylate), le vinyl pyrrolidone et le chlorure de triméthylammoniumméthyl méthacrylate.

Dans le cas de la synthèse de PHA par post-modification, les chaînes hydrophiles préexistantes peuvent être de différentes natures chimiques, parmi lesquelles l'ensemble des polymères obtenus en polymérisant un ou plusieurs des types de monomères cités précédemment ainsi que, de manière non limitative: l'oxyde de polyéthylène (ou polyéthylène glycol), les éthers de cellulose (comme l'hydroxyéthylcellulose), les polysaccharides naturels (comme les gommes de guar), et l'alcool polyvinylique.

Des exemples de monomères hydrophobes qui peuvent être utilisés comprennent, mais ne sont pas limités aux groupes suivants: les acrylates d'alkyles, les méthacrylates d'alkyles, les acrylamides d'alkyles, les méthacrylamides d'alkyles, les bromures de diméthylammoniuméthyl méthacrylate d'alkyles, les chlorures de diméthylammoniuméthyl méthacrylate d'alkyles, les iodures de diméthylammoniuméthyl méthacrylate d'alkyles, les bromures de diméthylammoniumpropyl méthacrylamide d'alkyles, les chlorure de diméthylammoniumpropyl méthacrylamide d'alkyles et les iodures de diméthylammoniumpropyl méthacrylamide d'alkyles. Les chaînes alkyles peuvent être branchées ou non branchées et peuvent comprendre entre environ 4 et 25 atomes de carbone.

### Les tensioactifs

L'invention n'est pas limitée à des tensioactifs d'une nature chimique particulière. Ces derniers sont des systèmes composés d'un ou plusieurs types de molécules présentant des propriétés tensioactives au sens large.

Ils peuvent être ioniques ou non ioniques.

Des exemples de familles de molécules tensioactives sont, de manière non limitative: les alcools gras polyéthoxylés, les sels de métaux alcalins de sulfate d'alkyle éthoxy et les bromures de triméthyl ammonium d'alkyle.

### Les sols (pré-gels)

L'invention concerne, sans limitation de nature chimique et physique, tous les types de gels, c'est-à-dire des gels dans tout type de solvant, provenant de la gélification de sols appelés aussi pré-gels.

Les gels sont préférentiellement des hydrogels, constitués préférentiellement soit d'un polymère hydrosoluble (par exemple de type polyacrylamide) en solution et d'un agent de réticulation, soit de particules (par exemple de silice colloïdales) capables de former des liens entres elles avec ou sans agents de réticulation, soit encore de PHA capables de former des gels dans les zones de forte perméabilité et n'étant pas sensible aux tensioactifs injectés dans le cadre de la méthode selon l'invention.

Les formulations de type hydrogels polymère peuvent être, par exemple, composées, d'une part, de polymères à base de polyacrylamide, portant des unités acrylates et/ou acide acryliques et/ou sulfonées (de type acide 2-acrylamido-2-méthylpropane sulfonique) et/ou de N-vinyl pyrrolidone et, d'autre part, d'agents de réticulation sous la forme de complexe(s) d'ions métalliques multivalents tels le zinc, le chrome, le titane, le zirconium et l'aluminium (initialement complexés par exemple sous la forme de chlorures, d'acétates ou de lactates), formant ainsi des gels physiques à liaisons ioniques.

### Les solutions aqueuses

Les PHA, les tensioactifs et les hydrogels peuvent être mis en solution dans des eaux contenant des sels dissous. La concentration de ces sels peut varier de 0 g/L à la saturation, c'est-à-dire par exemple à 357 g/L pour NaCl à 25°C.

Le pH des solutions aqueuses de PHA et de tensioactif peut être compris entre 3 et 12.

### Procédé selon l'invention

Le procédé de traitement selon l'invention est décrit aux figures 1 à 5.

L'invention concerne, dans ce mode de réalisation, les systèmes géothermaux constitués d'un moins un doublet de puits, c'est-à-dire d'au moins un puits 1 injecteur d'eau utilisée comme fluide caloporteur et d'au moins un puits 2 producteur d'eau utilisée comme fluide caloporteur, qui sont forés dans un réservoir souterrain de chaleur constitué par une formation géologique. Dans le cas des EGS, le fluide caloporteur circule du premier puits 1 au deuxième puits 2 à travers une zone de la formation géologique 3 se trouvant entre les deux puits, dans les cas des systèmes géothermaux en aquifère ou des ATES, le fluide caloporteur est soutiré par le puits 2 et réinjecté par le puits 1, de telle manière que la circulation de ce fluide à travers la formation géologique est minimale.

Dans le cas où un court-circuit hydraulique est présent, à l'état initial (figure 1), de l'eau froide (flèche f1) est injectée dans le puits injecteur 1 et circule dans la zone 3 vers le puits producteur 2 en empruntant de manière préférentielle un réseau de fractures majeures 4 et/ou de zones de fortes perméabilités 5, de telle manière que la température de l'eau produite par le puits producteur 2 est plus faible que celle nécessaire pour un fonctionnement satisfaisant du système.

Ce mode opératoire concerne aussi bien les systèmes géothermaux en aquifère et les ATES (pour lesquels le fluide caloporteur est la saumure de l'aquifère) que les EGS (pour lesquels le fluide caloporteur est de l'eau injectée depuis la surface).

Cette situation correspond aussi à des cas d'exploitation de réservoirs d'hydrocarbures fracturés, pour lesquels le procédé selon l'invention peut s'appliquer également. C'est l'étape a0) mentionnée plus haut.

Dans une première étape de la méthode (figure 2), c'est-à-dire l'étape a) mentionnée plus haut, une solution de PHA est injectée par le puits injecteur 1 (flèche f3). Le PHA pénètre dans toutes les zones de la zone 3 de la formation géologique, mais ne forme pas de gel dans le réseau de fractures majeures 4 et/ou de zones de fortes perméabilités 5 du fait de leur perméabilité trop importante.

Il forme en revanche un gel dans la zone matricielle et/ou le réseau de fractures secondaires (c'est-à-dire des fractures de faible ouverture et/ou fortement ramifiées, non référencées à la figure), si la perméabilité associée est suffisamment faible. Cela permet de protéger ces zones contre l'invasion par d'autres additifs chimiques. Le PHA est par exemple un polyacrylamide partiellement sulfoné (par exemple avec 5 mol-% de monomères sulfonés) dont le caractère associatif provient de la présence de chaînes latérales alkyles (par exemple à 12 carbones) portées par une certaine portion des monomères acrylamide (par exemple 0,5 mol-%).

Dans une deuxième étape de la méthode (figure 3), c'est-à-dire l'étape b) mentionnée plus haut, un sol (ou pré-gel, également appelé "gelant" en anglais), susceptible de former un gel, est injecté par le puits injecteur 1 (flèche f4). Du fait de la présence du gel de PHA protecteur dans la zone matricielle et/ou le réseau de fractures secondaires , ce pré-gel se propage essentiellement dans le réseau de fractures majeures 4 et/ou les zones 5 de fortes perméabilités.

L'injection de tout fluide est ensuite interrompue, afin de permettre au sol/pré-gel de former un gel réduisant fortement la perméabilité (au minimum d'un facteur 5, 8 ou de préférence au minimum d'un facteur 10) du réseau de fractures majeures et/ou les zones de fortes perméabilités.

La formation du gel peut être par exemple le résultat d'une réaction de gélification à cinétique plus ou moins lente ou bien d'une activation par un paramètre physique (par exemple la température) ou par un agent chimique connu de l'état de l'art.

Dans une troisième étape de la méthode (figure 4), c'est-à-dire l'étape c) mentionnée plus haut, une solution de tensioactif(s) (flèche F5) conçue pour interagir avec les PHA injectés à l'étape a), de telle manière qu'elle fait disparaître les liens hydrophobes interchaînes des PHA, et donc le gel de PHA formé dans la zone matricielle et/ou dans le réseau de fractures secondaires. Le tensioactif peut par exemple être un Alkyl Glyceryl Ether Sulfonate (AGES) à 7 atomes de carbone dans la partie hydrophobe, et, dans la partie hydrophile, à 7 groupements propyléthoxy (PO) et 9 groupements éthoxy (EO).

Cela a pour effet de restaurer la perméabilité de la zone matricielle et/ou du réseau de fractures secondaires, de telle manière que le facteur de réduction de perméabilité est le plus proche possible de 1 (pas de modification de perméabilité) et préférentiellement inférieur à 100.

Dans l'état final du système (figure 5), on injecte à nouveau de l'eau froide (flèche f1) dans le puits injecteur 1 (étape d) précédemment décrite). Cette eau circule dans la zone matricielle et/ou le réseau de fractures secondaires de telle manière qu'elle parvient au puits producteur 2 (flèche f6) à une température suffisante pour permettre un fonctionnement satisfaisant du système (dans le cas des EGS) ou pour ne pas avoir d'influence sur la température de l'eau produite par le puits producteur (dans le cas des systèmes géothermaux en aquifère ou des ATES) : on peut donc reprendre l'exploitation des capacités géothermales de la formation géologique 3 dans des conditions de fonctionnement optimisées.

### Exemple 1 : PHA dans un milieu poreux matriciel

Le premier exemple présente un test d'injection de solution d'un polymère PHA dans un milieu poreux matriciel montrant qu'un PHA peut former un gel stable dans une formation matricielle, conduisant à son quasi-colmatage, et que ce gel peut disparaître sous l'effet de l'injection d'une solution de tensioactif.

Dans cet exemple, le PHA choisi est un terpolymère constitué de 94,5% molaire de monomères acrylamide, 5% molaire de monomères sulfonés et 0,5% molaire des monomères de type acrylamide portant des groupements latéraux hydrophobes constitués par des chaînes alkyles linéaires à 12 atomes de carbone.

Le PHA est en solution à 2,5 g/L dans une saumure à 20 g/L NaCl.

Le tensioactif est dans cet exemple un Alkyl Glyceryl Ether Sulfonate (AGES) à 7 atomes de carbone dans la partie hydrophobe, et, dans la partie hydrophile, 7 groupements propyléthoxy (PO) et 9 groupements éthoxy (EO). Le tensioactif est en solution à 1 g/L dans une saumure à 20 g/L NaCl On ajuste de façon connue de la personne du métier sa concentration par rapport à celle du PHA.

Le milieu poreux est un massif granulaire constitué de grains de quartz ayant une perméabilité de 200 mD et une porosité de 31%, initialement saturé par une saumure à 20 g/L NaCl.

La cellule porte-échantillon pour le milieu poreux est équipée de prises de pression en amont et en aval ainsi que de prises de pression intermédiaires, de telle manière que les pertes de charge (gradient de pression) peuvent être déterminées sur la longueur totale du milieu poreux (soit 10 cm) ainsi que sur une section intermédiaire d'entrée de 1 cm de longueur ("0-1cm") et sur une section interne de 4 cm de longueur allant du 1^{er} au 5^{ème} cm du milieu poreux ("1-5cm").

L'observable est la perte de charge normalisée notée "Rm" (ou facteur de réduction de la mobilité de la phase aqueuse), calculée, pour chaque section, en divisant la perte de charge au cours des différentes étapes d'injection du test par la perte de charge de référence déterminée lors de l'injection de saumure, à la même vitesse d'écoulement, dans l'état initial du milieu poreux.

Tous les fluides sont injectés à l'aide de pompes volumétriques à un débit correspondant à une vitesse interstitielle d'écoulement de 0,4 m/jour. Toutes les étapes du tests sont effectuées à une température fixe de 30°C.

Les résultats présentés sur la figure 7 présentent les valeurs de Rm déterminées au cours de l'essai en fonction du nombre de volumes de pore injectés (PVI) des différents fluides. Ils montrent que:
- au cours de l'étape (1) d'injection de PHA, une très forte réduction de la perméabilité est obtenue sur la section 0-1cm (Rm de l'ordre de 30000) mais pas en profondeur. Dans la mesure où la viscosité relative de la solution de PHA est inférieure à 30 quel que soit le gradient de vitesse, cela indique qu'un gel de PHA se forme à l'amont du milieu poreux. On observe aussi que ce gel ne se propage pas en profondeur, puisque la valeur de Rm reste de l'ordre de 1 sur la section 1-5cm;
- au cours de l'étape (2) d'injection de saumure à 20 g/L NaCl, le gel se maintient avec une valeur de Rm proche de 10000 sur la section 0-1cm après environ 4 PVI de saumure. Ceci indique que la perméabilité est, de manière stable, réduite d'un facteur 10000 sur la section d'entrée. L'effet de protection de la matrice recherché est donc obtenu;
- au cours de l'étape (3) d'injection de tensioactif, le gel disparaît puisque la valeur de Rm sur la section 0-1cm diminue fortement pour atteindre 20 après environ 1,5 PVI de tensioactif, cette valeur n'étant pas stabilisée et toujours en cours de diminution à la fin de l'essai. Ceci démontre que l'effet de restauration de la perméabilité de la zone matricielle peut être obtenu selon le procédé selon l'invention.

Avant le test dont les résultats sont montrés dans le graphe de la figure 7, une étude de viscosimétrie a été réalisée à l'aide d'un viscosimètre de référence commerciale Low Shear LS300, de la société ProRheo, les résultats étant représentés dans le graphe de la figure 6.

Les mesures ont été faites à 30°C, sur trois solutions :
- une solution aqueuse X de polymère PHA selon l'exemple, à 2,5 g/L
- une solution aqueuse Y de polymère équivalent non associatif P (c'est-à-dire un polymère identique au PHA, à ceci près qu'il ne porte pas de groupement hydrophobe), à une concentration de 2,5 g/L
- une solution aqueuse Z avec le PHA de la solution X, à 2,5 g/L additionnée des tensioactifs de l'exemple à une concentration de 1g/L.

L'essai a été réalisé avec un pack granulaire (composition et résultats donnés au tableau 1 ci-après) préparé à sec avec des grains de sable dans un porte-échantillon équipé de piquages permettant de mesurer la pression en différents points du corps de la cellule pore-échantillon, ce qui permet de déterminer les pertes de charges sur des sections intermédiaires du milieux poreux. Le milieu poreux a une longueur totale de 10,2 cm et les différences de pression (ΔP) pouvaient être déterminées avec des capteurs de pression différentielle sur la longueur totale, une section d'entrée de 1 cm de long (« section de 0,1 cm ») et une section interne de 4 cm de long (« section de 1 à 5 cm »). De la saumure et de la saumure avec des solutés (polymère et/ou tensioactif) ont été injectées à faible débit (représentatif de l'écoulement en profondeur typique dans les réservoirs) à l'aide de deux pompes volumétriques de référence commerciale QX 6000 de la société Quizix.

Dans la première étape de l'expérience (1), un volume de solution de PHA de 0,3 volume de pores a été injecté afin de démontrer que l'injection de PHA conduit à la formation d'un gel temporaire résistant.

Dans la deuxième étape (2), un volume de saumure de 4 volumes de pores a été injecté pour évaluer la nature « irréversible » du gel.

Dans la troisième et dernière étape (3), un volume de 3 volumes de pores de solution de tensioactif a été injecté afin d'évaluer la capacité du tensioactif à perturber le gel temporaire et à restaurer la perméabilité.

**[Table 1]**

| Minéralogie | Mélange granulaire de 85 %poids de sable de Fontainebleau (110 µm de taille de grain médiane) et 15 %poids de grains de quartz de référence BCR-067 (taille de grains moyenne 10 µm) | | | |
|---|---|---|---|---|
| Perméabilité (mD) | Porosité (%) | Volume de pore (mL) | | Longueur (cm) |
| 230 | 31 | 5,6 | | 10,2 |

| Temperature (°C) | Composition de la saumure | | vitesse interstitielle d'injection (m/jour) | |
|---|---|---|---|---|
| 30 | 20 g/L NaCl | | 0,44 | |

Comme le montre le graphe de la figure 6, la viscosité relative du PHA est significativement plus élevée que celle du polymère non associatif équivalent P. Mais lorsque le tensioactif est ajouté à la solution de PHA (mélange noté PHA'), sa viscosité chute à des valeurs très proches de celle du polymère non associatif équivalent P.

Ce résultat constitue une bonne indication du rôle « perturbateur » du tensioactif vis-à-vis des liaisons hydrophobes du polymère PHA.

### Exemple 2 : sol-gel dans un milieu poreux fracturé

Le deuxième exemple présente un test d'injection d'une formulation sol dans une carotte fracturée artificiellement. Au cours de ce test, la formulation se propage dans la fracture, passe en phase gel après une période de repos et colmate ainsi la fracture.

Après la formation du gel, la perméabilité mesurée de la carotte est très proche de la perméabilité de matrice de la carotte avant la création de la fracture.

Dans cet exemple, le sol est constitué d'un polyacrylamide partiellement sulfoné (25 mol-% d'acide 2-acrylamido-2-méthylpropane sulfonique) à une concentration de 10 g/L et de lactate de zirconium à une concentration de 500 mg/L. Ces deux composés sont solubilisés dans une saumure dont la composition est présentée dans la Table 2 ci-dessous.

**[Table 2]**

| Ion | Concentration (mg/L) |
|---|---|
| Na⁺ | 25 450 |
| K⁺ | 3 245 |
| Ca²⁺ | 8 000 |
| Mg²⁺ | 144 |
| Li⁺ | 173 |
| Sr²⁺ | 424 |
| Cl⁻ | 57 411 |
| Total des solides dissous | 94 847 |

Le milieu poreux est constitué d'une carotte de grès de type "Buntsandstein" de 20 cm de long et 4 cm de diamètre dans laquelle une fracture artificielle est créée par sciage dans le sens de la longueur de la carotte et maintenue ouverte à l'aide de lamelle en PEEK (polyétheréther cétone) de 200 µm d'épaisseur (Figure 8). Le test est effectué à 85°C. Pendant toutes les étapes d'injection du test, la carotte est placée dans gaine en caoutchouc Vitton, elle-même dans une cellule porte-échantillon de type Hassler, avec une pression de confinement réglée à 60 bars et une pression de pore réglée à 5 bars.

Les étapes du test sont comme suit:
(a) détermination de la perméabilité de matrice de la carotte dans son état initial;
(b) découpe de la carotte en deux moitiés le long de son axe principal à l'aide d'une scie à fil;
(c) installation de lamelles de PEEK d'une épaisseur de 200 µm pour s'assurer que la fracture reste ouverte sous pression pendant l'expérience;
(d) détermination de la perméabilité du bouchon avec la fracture artificielle ouverte
(e) injection de la formulation sol à l'aide d'une seringue;
(f) circulation de saumure sur les pistons et tubulures en amont et en aval (en utilisant des ouvertures doubles aux extrémités des pistons, permettant de faire circuler la saumure sur les faces d'entrée et de sortie de la carotte) pour s'assurer que le sol reste uniquement à l'intérieur de la fracture;
(g) observation d'un temps de repos à 85°C pendant 72 heures, pour permettre à la transition sol-gel de se produire (la durée a été définie pour être représentative du temps nécessaire pour atteindre un gel d'après des tests en tube);
(h) injection de saumure synthétique, d'abord à faible débit (fixé, par convention, à 3 mL/h, correspondant à une vitesse interstitielle vᵢ de 0,3 m/jour, représentative des conditions de d'écoulement en profondeur) pour vérifier si la fracture est bouchée par le gel, puis à des débits variables (jusqu'à 200 mL/h, correspondant à vᵢ de 21 m/jour, ce qui devrait être représentatif des vitesses maximales près du puits) pour déterminer la perméabilité.

La Table 3 ci-dessous présente les valeurs de perméabilité de la carotte déterminée dans l'état initial (étape a), après création de la fracture (étape d) et après formation du gel (étape h). Puisque l'on observe que perméabilité à l'étape (h) est très proche de celle à l'étape (a) : les résultats démontrent l'efficacité d'un gel polymère pour colmater une fracture.

**[Table 3]**

| Etape du test | Perméabilité (mD) |
|---|---|
| (a) (état initial de la carotte) | 51 |
| (d) (fracture ouverte) | 8000 |
| (h) (fracture colmatée par un gel) | 44 |

## Revendications

1. Procédé de modification de distribution de la perméabilité d'une zone (3) de formation géologique présentant des portions de matériau rocheux de perméabilités différentes, dont des premières portions de perméabilité dite faible et des deuxièmes portions de perméabilité dite élevée, ladite zone de formation géologique étant située entre un puits (1) d'injection de fluide et un puits (2) de production de fluide, ledit procédé comprenant les étapes successives suivantes :
- a) on injecte une solution contenant au moins un polymère hydrophobiquement associatif PHA dans le puits (1) d'injection, pour que ladite solution circule dans ladite zone de formation géologique et qu'elle colmate au moins en partie la perméabilité des premières portions de perméabilité faible en formant un premier gel de PHA
- b) on injecte une solution contenant au moins un sol dans le puits (1) d'injection, pour que ledit sol circule dans ladite zone et qu'il colmate au moins en partie la perméabilité des deuxièmes portions de perméabilité élevée (5) laissées libres en formant un deuxième gel,
- c) on injecte une solution contenant au moins un agent tensioactif dans le puits (1) d'injection, ledit ou lesdits agents tensioactif(s) circulant dans ladite zone et interagissant avec le premier gel de PHA de façon à ce que la perméabilité colmatée à l'étape a) des premières portions de perméabilité faible redevienne au moins en partie accessible aux fluides.

2. Procédé de modification de distribution de la perméabilité d'une zone (3) de formation géologique selon la revendication précédente, **caractérisé en ce que**, dans l'étape b), le sol forme un gel par une réaction de gélification spontanée ou activée par un paramètre physique, notamment par apport thermique, ou par un activateur chimique.

3. Procédé de modification de distribution de la perméabilité d'une zone (3) de formation géologique selon l'une des revendications précédentes, **caractérisé en ce que** :
- les premières portions de perméabilité faible correspondent à un réseau de fractures secondaires et/ou une région matricielle
- les deuxièmes portions de perméabilité élevée correspondent à un réseau de fractures majeures (4) et/ou à des zones matricielles (5) à forte perméabilité.

4. Procédé de modification de distribution de la perméabilité d'une zone (3) de formation géologique selon l'une des revendications précédentes, **caractérisé en ce que** le polymère hydrophobiquement associatif PHA injecté à l'étape a) comprend des chaînes constituées à partir de monomères hydrophiles et de monomères hydrophobes, les fractions molaires totales en monomères hydrophobes étant de préférence comprises entre 0,05% et 10%, notamment entre 0,1% et 3%, et leurs masses molaires étant de préférence comprises entre 10³ et 10⁸ g/mol.

5. Procédé de modification de distribution de la perméabilité d'une zone (3) de formation géologique selon l'une des revendications précédentes, **caractérisé en ce que** le sol injecté à l'étape b) est choisi parmi au moins un des composés suivants :
- des polymères hydrosolubles, notamment de type polyacrylamide, en solution et d'un agent de réticulation notamment organique ou inorganique,
- des particules, notamment de silice colloïdale, aptes à former des liens entres elles avec ou sans agent de réticulation,
- des polymères hydrophobiquement associatifs PHA insensibles au(x) tensioactif(s) injectés à l'étape c).

6. Procédé de modification de distribution de la perméabilité d'une zone (3) de formation géologique selon l'une des revendications précédentes, **caractérisé en ce que** l'agent tensioactif injecté à l'étape c) est choisi parmi au moins un des composés suivants :
- les alcools gras polyéthoxylés,
- les sels de métaux alcalins de sulfate d'alkyle éthoxy
- les bromures de triméthyl ammonium d'alkyle.

7. Procédé de modification de distribution de la perméabilité d'une zone (3) de formation géologique selon l'une des revendications précédentes, **caractérisé en ce que** les solutions contenant
- le polymère hydrophobiquement associatif PHA injecté à l'étape a)
- et/ou le sol injecté à l'étape b)
- et/ou que l'agent tensioactif injecté à l'étape c)
sont des solutions aqueuses, contenant optionnellement des sels minéraux dissous.

8. Procédé de modification d de distribution e la perméabilité d'une zone (3) de formation géologique selon l'une des revendications précédentes, **caractérisé en ce qu'**on détermine la concentration en agent(s) tensioactif(s) dans la solution injectée à l'étape c) en fonction de la concentration micellaire critique CMC dudit(desdits) tensioactif(s).

9. Procédé de modification de distribution de la perméabilité d'une zone (3) de formation géologique selon l'une des revendications précédentes, **caractérisé en ce qu'**il comprend au moins une étape supplémentaire d'injection dans le puits d'injection (1) d'une solution aqueuse, comprenant optionnellement un ou des sels minéraux dissous et/ou un ou des polymères non associatifs solubilisés,.
, la ou les étapes supplémentaires étant notamment réalisées avant l'étape a), et/ou après l'étape c) et/ou entre les étapes a) et b) et/ou entre les étapes b) et c)

10. Procédé de modification de distribution de la perméabilité d'une zone (3) de formation géologique selon l'une des revendications précédentes, **caractérisé en ce que** :
- l'étape a) d'injection de la solution contenant au moins un polymère hydrophobiquement associatif PHA est précédée d'une étape a0) d'injection d'une solution aqueuse sans ajout de composé chimique hormis d'éventuels sels minéraux dissous et/ou d'une étape d'injection a0') d'une solution aqueuse comprenant des polymères non associatifs solubilisés et éventuellement des sels minéraux dissous
et/ou
- l'étape c) d'injection de la solution contenant au moins un agent tensioactif est suivie d'une étape c1) d'injection d'une solution aqueuse sans ajout de composé chimique hormis d'éventuels sels minéraux dissous et/ou d'une étape d'injection c1') d'une solution aqueuse comprenant des polymères non associatifs solubilisés et éventuellement des sels minéraux dissous.

11. Utilisation du procédé selon l'une des revendications précédentes pour réduire ou supprimer les courts-circuits hydrauliques entre le puits (1) d'injection et le puits (2) de production à travers une zone (3) de formation géologique.

12. Utilisation du procédé selon l'une des revendications 1 à 10 pour une exploitation géothermale, notamment :
- pour des systèmes aquifères, profonds ou non profonds,
- pour les systèmes géothermaux haute énergie très profonds, notamment en roche chaude sèche,
- pour les installations géothermales de stockage inter-saisonnier de chaleur en aquifère,
ou pour une exploitation de gisements d'hydrocarbures, notamment par une technique de récupération assistée d'hydrocarbures.
